# EUROPÄISCHE PATENTANMELDUNG

(11) **EP 1 126 205 A1**
(43) Veröffentlichungstag der Anmeldung: **22.08.2001**
(21) Anmeldenummer: 01103098.8
(22) Anmeldetag: 09.02.2001
(51) Int. Cl.: F16L 11/127, F16L 25/00

(54) **Anordnung mit einem hydraulischen Schlauch und einer elektrischen Leitung**

(30) Priorität: 18.02.2000 DE 10007442
(71) Anmelder: STILL GMBH, D-22113 Hamburg (DE)
(72) Erfinder: Schönewald, Peter, Dipl.-Ing., 22145 Stapelfeld (DE)
(74) Vertreter: Kasseckert, Rainer

(57) **Zusammenfassung**

Die Erfindung betrifft eine Anordnung mit einem hydraulischen Schlauch (8; 9) zur Versorgung mindestens eines hydraulisch betätigbaren Bauteiles und mit einer elektrischen Leitung zur Versorgung mindestens eines elektrisch betätigbaren Bauteiles. Das hydraulisch und das elektrisch betätigbare Bauteil befinden sich z. B. in einem Anbaugerät, das an einem Hubgerüst eines Gabelstaplers befestigbar ist. Um den hydraulischen Schlauch (8; 9) und die elektrische Leitung auf einfache Weise montieren zu können und um eine geringe Störanfälligkeit zu erzielen, ist erfindungsgemäß die elektrische Leitung in den hydraulischen Schlauch (8; 9) integriert. Hierbei ist die elektrische Leitung innerhalb der Schlauchwand (10) angeordnet und gegenüber dem Schlauchkanal (17) und der Außenumgebung elektrisch isoliert. Die elektrische Leitung ist bevorzugt als elektrisch leitfähiges Trägergeflecht (16) ausgebildet, das gegenüber den Schlauchkupplungen (11, 12) mittels axial zwischen dem Trägergeflecht (16) und den Schlauchkupplungen (11, 12) angeordneter Ringscheiben (18) elektrisch isoliert ist. Um das Trägergeflecht (16) an einen Stromkreis anschließen zu können, ist an beiden Schlauchenden jeweils eine Klemmschelle (21) angeordnet, die bevorzugt mindestens einen radial nach innen gerichteten Fortsatz (21) aufweist, der zum Eingriff mit dem Trägergeflecht (16) ausgebildet ist.

## Beschreibung

Die Erfindung betrifft eine Anordnung mit einem hydraulischen Schlauch zur Versorgung mindestens eines hydraulisch betätigbaren Bauteiles und mit einer elektrischen Leitung zur Versorgung mindestens eines elektrisch betätigbaren Bauteiles.

Hydraulische Schläuche kommen beispielsweise in Arbeitsmaschinen mit hydraulischen Verbrauchern, wie Teleskopzylindem usw., zum Einsatz. Solche Arbeitsmaschinen sind z. B. Baumaschinen und Flurförderzeuge. Als Gabelstapler ausgebildete Flurförderzeuge sind regelmäßig mit einem Hubgerüst versehen, an dem ein Anbaugerät befestigbar ist. Je nach Anwendungsbereich können verschiedenartigste Anbaugeräte zum Einsatz kommen. Auf diese Weise ergibt sich eine universelle Nutzbarkeit von Gabelstaplern oder anderen Flurförderzeugen. Neben Anbaugeräten ohne Antrieb, wie z. B. Gabelzinken, kommen vor allem Anbaugeräte mit hydraulischem Antrieb zum Einsatz, z. B. Klammergabeln, Palettenwendegeräte, Schubgabeln.

In vielen Fällen übersteigt die Anzahl der hydraulisch betätigbaren Bauteile des Anbaugerätes die Anzahl der am Hubgerüst zur Versorgung solcher Anbaugeräte vorhandenen Schläuche. Meist stehen am Hubgerüst maximal zwei Schlauchpaare für diese Zwecke zur Verfügung, die mittels Schnellverschlußkupplungen mit dem Anbaugerät bzw. dessen hydraulisch betätigbaren Bauteilen verbindbar sind. Soll nun ein Anbaugerät mit drei oder mehr hydraulisch betätigbaren Bauteilen zum Einsatz kommen, so wird zwischen diesen Bauteilen mittels eines Magnetventiles umgeschaltet. Zu diesem Zweck ist es erforderlich, eine elektrische Versorgung für das Anbaugerät zur Verfügung zu stellen. Dies geschieht durch eine elektrische Leitung, die z. B. parallel zum hydraulischen Schlauch oder mit einer Kabeltrommel zum Anbaugerät geführt wird. Da das Hubgerüst in der Regel ausfahrbar und zudem ein auf- und abbewegbarer Lastaufnahmeschlitten daran befestigt ist, gestaltet sich die zusätzliche Anordnung einer elektrischen Leitung mitunter recht aufwendig. Darüber hinaus erhöht eine solche Anordnung die Störungsanfälligkeit des Hubgerüstes.

Der vorliegenden Erfindung liegt die Aufgabe zu Grunde, eine Anordnung der eingangs genannten Art zur Verfügung zu stellen, die eine einfache Montage des hydraulischen Schlauchs und der elektrischen Leitung ermöglicht und eine geringe Störanfälligkeit aufweist.

Diese Aufgabe wird erfindungsgemäß dadurch gelöst, daß die elektrische Leitung in den hydraulischen Schlauch integriert ist. Mit dem Anbringen des hydraulischen Schlauches, beispielsweise am Hubgerüst eines Gabelstaplers, wird somit zugleich auch die elektrische Leitung installiert. Es ist daher nicht erforderlich, eine elektrische Leitung gesondert zu verlegen. Dies vereinfacht den Montageaufwand erheblich. Eine integrierte elektrische Leitung ist zudem besser gegen Beschädigungen geschützt als z. B. eine parallel zum Hydraulikschlauch verlegte, separate elektrische Leitung oder eine speziele Kabeltrommel.

Zweckmäßigerweise ist die elektrische Leitung innerhalb der Schlauchwand angeordnet und gegenüber dem Schlauchkanal und der Außenumgebung elektrisch isoliert.

Sofern gemäß einer vorteilhaften Weiterbildung der Erfindung die elektrische Leitung als elektrisch leitfähiges Trägergeflecht ausgebildet ist, kann ein handelsüblicher Hochdruck-Schlauch verwendet werden. Dieser weist ein metallisches Trägergeflecht auf, das erfindungsgemäß die Funktion einer elektrischen Leitung übernimmt.

Bei Verwendung eines Hochdruckschlauches mit einem Trägergeflecht aus Kunststoff wird zweckmäßigerweise ein elektrischer Leiter zwischen den Schlauchschichten angeordnet.

Um unerwünschten Stromfluß zu verhindern, ist es günstig, wenn daß elektrische leitfähige Trägergeflecht gegenüber den Schlauchanschlußkupplungen elektrisch isoliert ist.

Dies kann auf einfache Weise und mit Vorteil dadurch geschehen, daß axial zwischen dem Trägergeflecht und den Schlauchkupplungen isolierende Ringscheiben angeordnet sind.

Um die elektrische Leitung mit Strom beaufschlagen zu können, ist in vorteilhafter Weiterbildung der Erfindung an beiden Schlauchenden jeweils eine Klemmschelle angeordnet, die mit Abstand zur Schlauchkupplung benachbart ist und mit dem Trägergeflecht elektrisch leitend verbunden ist.

Sofern gemäß einer ersten Ausgestaltung im Bereich der Klemmschelle das Trägergeflecht abschnittsweise freigelegt ist und mit der Klemmschelle in Kontakt steht, wird mit einfachsten Mitteln eine elektrische Verbindung zwischen der Klemmschelle und dem Trägergeflecht hergestellt.

Gemäß einer zweiten Ausgestaltung weist die Klemmschelle mindestens einen radial nach innen gerichteten Fortsatz auf, der zum Eingriff mit dem Trägergeflecht ausgebildet ist.

Besonders vorteilhaft ist die Verwendung der erfindungsgemäßen Anordnung in einem Hubgerüst, an dem ein Anbaugerät befestigbar ist, das mindestens ein hydraulisch betätigbares Bauteil und mindestens ein elektrisch betätigbares Bauteil aufweist, wobei der hydraulische Schlauch an das hydraulische betätigbare Bauteil und die elektrische Leitung an das elektrisch betätigbare Bauteil anschließbar ist.

Dabei ist zweckmäßigerweise das elektrisch betätigbare Bauteil als hydraulisches Schaltventil ausgebildet, das eingangsseitig an den Schlauch anschließbar ist und ausgangsseitig an mindestens zwei hydraulisch betätigbare Bauteile angeschlossen ist, wobei die hydraulisch betätigbaren Bauteile mittels des Schaltventiles mit dem Schlauch verbindbar sind.

Weitere Vorteile und Einzelheiten der Erfindung werden anhand des in den schematischen Figuren dargestellten Ausführungsbeispieles näher erläutert. Dabei zeigt
- Figur 1: ein Hubgerüst mit der erfindungsgemäßen Anordnung in der Rückansicht,
- Figur 2: das Hubgerüst gemäß Fig. 1 in Seitenansicht,
- Figur 3: einen Teilschnitt eines hydraulischen Schlauches und
- Figur 4: einen Schnitt durch ein Schlauchende eines hydraulischen Schlauches.

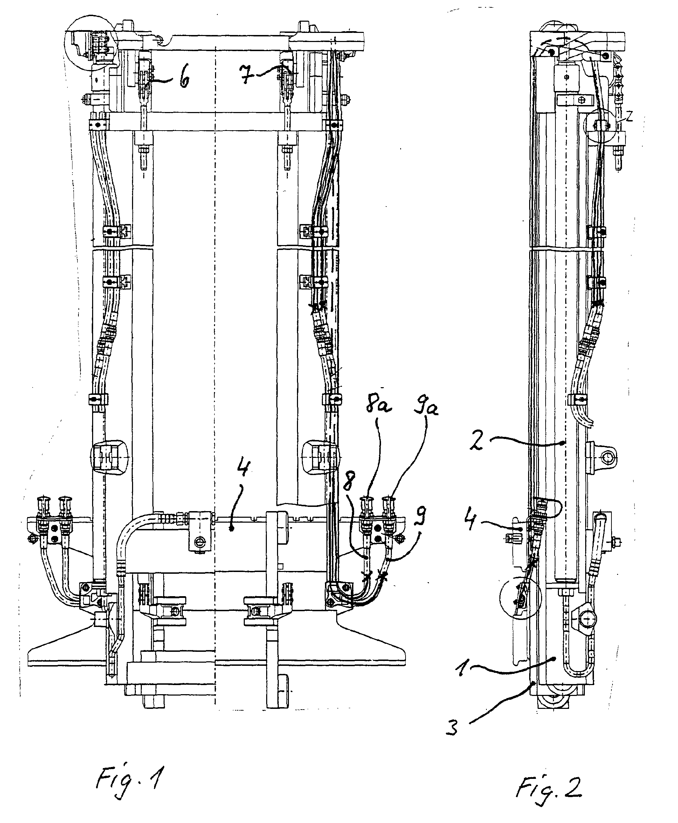

Das in den Figuren 1 und 2 dargestellte Hubgerüst ist im vorliegenden Ausführungsbeispiel ein Einfach-Hubgerüst, d. h. ein teleskopierendes Hubgerüst mit einem äußeren Standmast 1 und einem mittels zwei Hubzylindern 2 ausfahrbaren inneren Hubmast 3. Figur 1 zeigt das Hubgerüst in Rückansicht, d. h. in der Ansicht, die sich einer Bedienperson bietet, die sich auf dem Fahrersitz eines mit dem Hubgerüst ausgestatteten Gegengewichts-Gabelstaplers befindet.

Am inneren Hubmast 3 ist ein Lastaufnahmeschlitten 4 höhenbeweglich gelagert, der an zwei Hubketten 6, 7 aufgehängt ist, die über am oberen Ende des Hubmastes 1 befestigte Umlenkrollen geführt und am Standmast 1 befestigt sind. Beim Ausfahren des Hubmastes 3 bewegt sich daher der Lastaufnahmeschlitten 4 mit doppelter Hubgeschwindigkeit nach oben wie der Hubmast 3.

Am Lastaufnahmeschlitten 4 ist ein in den Figuren nicht dargestelltes Anbaugerät befestigbar, das zumindest ein hydraulisch betätigbares Bauteil aufweist. Zur Versorgung des hydraulisch betätigbaren Bauteils sind zwei hydraulische Schläuche 8 und 9 (Vorlauf- und Rücklaufleitung) am Hubgerüst vorgesehen, deren Enden am Lastaufnahmeschlitten 4 befestigt sind und mittels Schnellverschlußkupplungen 8a, 9a an hydraulisch betätigbare Bauteile anschließbar sind.

Die hydraulischen Schläuche 8, 9 können alternativ links oder rechts am Hubgerüst angeordnet sein (beide Möglichkeiten sind dargestellt). Sofern links und rechts am Hubgerüst jeweils zwei Schläuche vorhanden sind, können zwei hydraulisch betätigbare Bauteile des Anbaugerätes, die jeweils einen Vorlauf und einen Rücklauf aufweisen, gleichzeitig und unabhängig voneinander mit Hydrauliköl versorgt werden. Beide Schläuche 8, 9 sind analog zu den Hubketten 6, 7 über Umlenkrollen am oberen Ende des ausfahrbaren Hubmastes 3 geführt.

Erfindungsgemäß ist in zumindest einem hydraulischen Schlauch 8 oder 9 eine elektrische Leitung integriert. Dadurch kann ein elektrisches Bauteil des Anbaugerätes versorgt werden, sofern keine separate Masseleitung erforderlich ist. Befindet sich in beiden hydraulischen Schläuchen 8, 9 jeweils eine integrierte elektrische Leitung (in den Figuren 1 und 2 ist dies durch schwarze Freihandlinien symbolisiert, die dem Verlauf der hydraulischen Schläuche 8, 9 folgen), dann können zwei elektrische Bauteile des Anbaugerätes betätigt werden. Alternativ dazu kann bei Vorhandensein nur eines elektrischen Bauteils die zweite Leitung als Masseleitung verwendet werden.

Als elektrisches Bauteil kann beispielsweise ein elektromagnetisches Schaltventil Verwendung finden. Da in vielen Fällen die Anzahl der hydraulisch betätigbaren Bauteile eines Anbaugerätes die Anzahl der am Hubgerüst zur Versorgung solcher Anbaugeräte vorhandenen Schläuche übersteigt, kann durch das Schaltventil zwischen einer Vielzahl von hydraulisch betätigbaren Bauteilen umgeschaltet werden, d. h. die beiden Schläuche 8, 9 werden mit den hydraulisch betätigbaren Bauteilen verbunden.

Es versteht sich von selbst, daß die integrierte(n) elektrische(n) Leitung(en) auch für andere Zwecke genutzt werden können (Antrieb von Elektromotoren etc.).

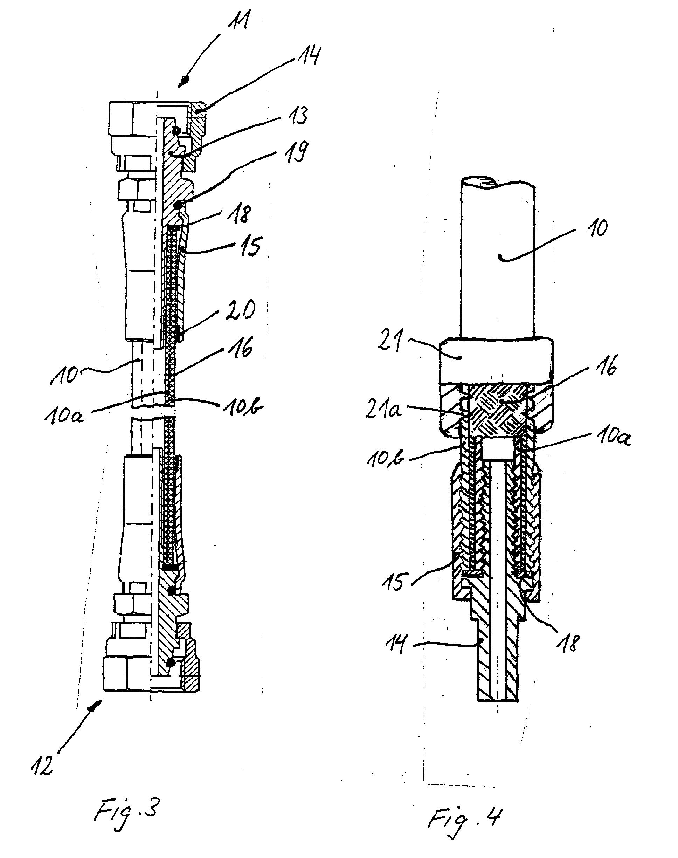

Figur 3 zeigt den Aufbau eines hydraulischen Schlauches mit integrierter elektrischer Leitung. Zum Einsatz kommt ein hydraulischer Hochdruckschlauch, der eine Schlauchwand 10 und zwei Schlauchkupplungen 11, 12 aufweist. Jede Schlauchkupplung besteht aus einem Nippelkörper 13, einer Überwurfmutter 14 und einer Hülse 15, wobei radial zwischen dem Nippelkörper 13 und der Hülse 15 die Schlauchwand 10 eingeklemmt ist.

In der Schlauchwand 10 befindet sich ein metallisches Trägergeflecht 16, das erfindungsgemäß als elektrische Leitung benutzt wird. Das Trägergeflecht 16 ist sowohl gegenüber dem Schlauchkanal 17 als auch gegenüber der Außenumgebung elektrisch isoliert. Aus Fertigungsgründen besteht die Schlauchwand 10 aus einer Innendecke 10a und einer Außendecke 10b, zwischen denen das metallische Trägergeflecht 16 angeordnet ist.

Um unerwünschten Stromfluß zu den Schlauchkupplungen 11, 12 zu verhindern, ist das Trägergeflecht 16 mittels axial zwischen dem Trägergeflecht 16 und den Schlauchkupplungen 11, 12 angeordneter Ringscheiben 18 elektrisch isoliert. Gegen Wassereintritt von außen ist eine Dichtung 19 zwischen der Hülse 15 und dem Nippelkörper 13 und eine Dichtung 20 zwischen der Hülse 15 und der Außendecke 10b vorgesehen.

Um die integrierte elektrische Leitung mit einem Stromkreis verbinden zu können, ist an jedem Schlauchende jeweils eine Klemmschelle 21 angeordnet, die mit dem Trägergeflecht 16 elektrisch leitend verbunden ist. Die Anordnung und der Aufbau einer Klemmschelle 21 ist in Figur 4 dargestellt. Die elektrische Verbindung zwischen der Klemmschelle 21 und dem Trägergeflecht 16 erfolgt durch radial nach innen gerichteten Fortsätze 21a, die mit dem Trägergeflecht 16 zum Eingriff kommen.

Die Schlauchkupplungen 11, 12 sind so gestaltet, daß beim Aufpressen der Schlauchwand 10 weder die Außendecke 10b noch die Innendecke 10a durchschnitten werden.

## Patentansprüche

1. Anordnung mit einem hydraulischen Schlauch zur Versorgung mindestens eines hydraulisch betätigbaren Bauteiles und mit einer elektrischen Leitung zur Versorgung mindestens eines elektrisch betätigbaren Bauteiles, **dadurch gekennzeichnet,** daß die elektrische Leitung in den hydraulischen Schlauch (8; 9) integriert ist.

2. Anordnung nach Anspruch 1, **dadurch gekennzeichnet,** daß die elektrische Leitung innerhalb der Schlauchwand (10) angeordnet und gegenüber dem Schlauchkanal (17) und der Außenumgebung elektrisch isoliert ist.

3. Anordnung nach Anspruch 2, **dadurch gekennzeichnet,** daß die elektrische Leitung als elektrisch leitfähiges Trägergeflecht (16) ausgebildet ist.

4. Anordnung nach Anspruch 3, **dadurch gekennzeichnet,** daß das Trägergeflecht (16) gegenüber den Schlauchkupplungen (11, 12) elektrisch isoliert ist.

5. Anordnung nach Anspruch 4, **dadurch gekennzeichnet,** daß axial zwischen dem Trägergeflecht (16) und den Schlauchkupplungen (11, 12) isolierende Ringscheiben (18) angeordnet sind.

6. Anordnung nach einem der Ansprüche 3 bis 5, **dadurch gekennzeichnet,** daß an beiden Schlauchenden jeweils eine Klemmschelle (21) angeordnet ist, die mit Abstand zur Schlauchkupplung (11; 12) benachbart ist und mit dem Trägergeflecht (16) elektrisch leitend verbunden ist.

7. Anordnung nach Anspruch 6, **dadurch gekennzeichnet,** daß im Bereich der Klemmschelle (21) das Trägergeflecht (16) abschnittsweise freigelegt ist und in Kontakt mit der Klemmschelle (21) steht.

8. Anordnung nach Anspruch 6, **dadurch gekennzeichnet,** daß die Klemmschelle (21) mindestens einen radial nach innen gerichteten Fortsatz (21) aufweist, der zum Eingriff mit dem Trägergeflecht (16) ausgebildet ist.

9. Anordnung nach einem der Ansprüche 1 bis 8, **gekennzeichnet durch** die Verwendung in einem Hubgerüst, an dem ein Anbaugerät befestigbar ist, das mindestens ein hydraulisch betätigbares Bauteil und mindestens ein elektrisch betätigbares Bauteil aufweist, wobei der hydraulische Schlauch (8; 9) an das hydraulische betätigbare Bauteil und die elektrische Leitung an das elektrisch betätigbare Bauteil anschließbar ist.

10. Anordnung nach Anspruch 9, **dadurch gekennzeichnet,** daß das elektrisch betätigbare Bauteil als hydraulisches Schaltventil ausgebildet ist, das eingangsseitig an den Schlauch (8; 9) anschließbar ist und ausgangsseitig an mindestens zwei hydraulisch betätigbare Bauteile angeschlossen ist, wobei die hydraulisch betätigbaren Bauteile mittels des Schaltventiles mit dem Schlauch (8; 9) verbindbar sind.
